# EUROPEAN PATENT SPECIFICATION

(11) **EP 1 672 028 B1**
(45) Date of publication and mention of the grant of the patent: **21.08.2013**
(21) Application number: 04773675.6
(22) Date of filing: 30.09.2004
(51) Int. Cl.: C08L 75/04, C08K 5/5465, C09D 175/04, C09J 175/04, C08G 18/28, C08G 18/62, C08G 18/78, C08K 5/544

(54) **RESIN COMPOSITION**
HARZZUSAMMENSETZUNG
COMPOSITION DE RESINE

(30) Priority: 10.10.2003 JP 2003352546
(43) Date of publication of application: 21.06.2006
(73) Proprietor: Nippon Mining & Metals Co., Ltd., Minato-ku Tokyo 105-8407 (JP)
(72) Inventor: KOBAYASHI, Hironori, c/o Nikko Materials Co. Ltd., Kitaibaraki-shi, Ibaraki 3191535 (JP); TSUCHIDA, Katsuyuki, c/o Nikko Materials Co. Ltd., Kitaibaraki-shi, Ibaraki 3191535 (JP); KUMAGAI, Masashi, c/o Nikko Materials Co. Ltd., Kitaibaraki-shi, Ibaraki 3191535 (JP)
(74) Representative: Gassenhuber, Andreas
(86) International application number: PCT/JP2004/014814
(87) International publication number: WO 2005/035662

(56) References cited:
- EP-A1- 0 526 847
- JP-A- 5 186 479
- JP-A- 9 295 992
- JP-A- 11 092 482
- JP-A- 11 310 768
- JP-A- 2000 297 093
- JP-A- 2000 297 094
- JP-A- 2003 071 378
- US-A- 4 537 934
- US-A1- 2003 088 108

## Description

### TECHNICAL FIELD

This invention relates to a resin composition containing a polyol and a polyisocyanate, in which the curing of the resin is promoted and adhesion to metals, inorganic materials, and organic materials is improved. This composition can be used in the fields of paints, adhesives, foams, and elastomers.

### BACKGROUND ART

A reaction of a polyol and a polyisocyanate is commonly used in the fields of urethane paints (two-pack types and moisture-curing one-pack types), urethane adhesives (two-pack types and hot melts), urethane foams, elastomers, and room temperature-curing fluorine-based paints.
The use of tertiary amine compounds and organometal compounds as catalysts in these reactions has been known conventionally. These catalysts are often used, both singly and in combinations, for industrial applications.

Of these catalysts, tertiary amine compounds have especially good moldability and productivity, and as such the compounds have found wide use as tertiary amine catalysts in the manufacture of polyurethane resins. On the other hand, metal catalysts have inferior moldability and productivity, and therefore in most cases metal catalysts are used together with a tertiary amine compound, and rarely by themselves.
However, the above-mentioned tertiary amine catalysts generally have an unpleasant odor, and are also highly volatile, so they cause various problems in the manufacturing process.

The use of an imidazole compound as a catalyst has been disclosed in Japanese Patent Publication No. 2003-206329 for example, in order to solve the problems encountered with tertiary amine catalysts. This imidazole compound is indeed effective as a catalyst in terms of solving the above problems, but it is less than completely satisfactory when it comes to adhesion to organic and inorganic materials.

In the field of paints, there is a need to extend the life time of paint films in order to reduce their environmental damage and cut the costs entailed by painting. One way that these needs can be met is to increase the adhesion of a paint to the base materials, but so far this approach has not necessarily been successful.
Also, the need for better adhesion to base materials seems to be constantly on the rise in the field of adhesives as well, although this need is not as yet being adequately met in these fields, either.

### DISCLOSURE OF THE INVENTION

It is an object of the present invention to solve the above-mentioned problems, such as the unpleasant odor produced when a tertiary amine compound was used as a catalyst in a reaction of a polyol and a polyisocyanate, and to provide a resin composition that promotes the curing of these resins and improves adhesion to metals, inorganic materials, and organic materials.

The inventors conducted diligent research into the above problems, and as a result arrived at the present invention upon discovering that when a silane coupling agent containing an imidazole group is used in a reaction of a polyol and a polyisocyanate, there is none of the unpleasant odor as encountered conventionally, the curing of the resin is promoted, and adhesion to metal and other such substrates is improved.

Specifically, the present invention is as follows.
(1) A resin composition, comprising the following components as essential components:
   (A) a polyol;
   (B) a polyisocyanate; and
   (C) a silane coupling agent containing an imidazole group,
(wherein the ratio NCO/OH of a number of isocyanate groups in the polyisocyanate (B) to a number of hydroxyl groups in the polyol (A) in said above composition is from 0.6 to 4.0, and a weight ratio of {(A) + (B)}:(C) is from 100:0.01 to 100:10).

(2) The resin composition according to (1) above, wherein the polyol (A) is a polyester polyol, an acrylic polyol, a polyether polyol, or a fluoroethylene-containing polyol.

(3) The resin composition according to (1) or (2) above, wherein the polyisocyanate (B) is toluene diisocyanate (TDI), diphenylmethane-4,4'-diisocyanate (MDI), diphenylmethane-2,4'-diisocyanate, hexamethylene diisocyanate (HDI), bis(4-isocyanatocyclohexyl)methane (H₁₂MDI), isophorone diisocyanate (IPDI), or a derivative obtained by oligomerization of these.

(4) The resin composition according to any of (1) to (3) above, wherein the silane coupling agent containing an imidazole group (C) is one that has a hydroxyl group in its molecule, or a derivative thereof.
(5) The resin composition according to any of (1) to (4) above, wherein the silane coupling agent containing an imidazole group (C) is a compound obtained by a reaction of an imidazole compound and 3-glycidoxypropyltrimethoxysilane.

(6) A urethane-based paint whose active component is the resin composition according to any of (1) to (5) above.
(7) A fluorine-based paint whose active component is the resin composition according to any of (1) to (5) above.
(8) A urethane-based adhesive whose active component is the resin composition according to any of (1) to (5) above.
(9)A urethane foam whose active component is the resin composition according to any of (1) to (5) above.
(10) An elastomer whose active component is the resin composition according to any of (1) to (5) above.

### BRIEF DESCRIPTION OF THE DRAWINGS

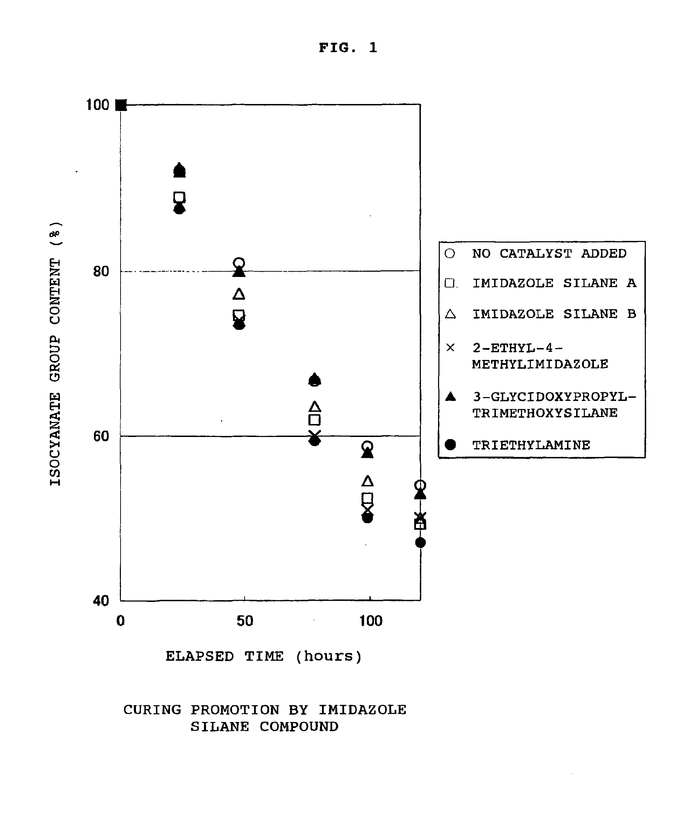

FIG. 1 is a graph of the residual isocyanate group content in the paint films in Examples 1 and 2 and Comparative Examples 1 to 4, which were measured by FT-IR.

### BEST MODE FOR CARRYING OUT THE INVENTION

The present invention will now be described.
The polyol used in the present invention can be any polyether polyol, polyester polyol, or acrylic polyol commonly used in the fields of paints and adhesives, or a fluoroethylene-containing polyol used in fluorine-based paints, or a fire-retardant polyol such as a phosphorus-containing polyol or a halogen-containing polyol, for example. These polyols can be used singly or in suitable mixtures.

The polyisocyanate used in the present invention may be any conventionally known polyisocyanate, examples of which include toluene diisocyanate (TDI), diphenylmethane-4,4'-diisocyanate (MDI), diphenylmethane-2,4'-diisocyanate, hexamethylene diisocyanate (HDI), bis(4-isocyanatocyclohexyl)methane (H₁₂MDI), isophorone diisocyanate (IPDI), and mixtures of these. From the standpoints of health and safety, a derivative obtained by oligomerizing one of the above-mentioned diisocyanates is preferable. Examples of these derivatives include a trimethylolpropane adduct of TDI, an isocyanurate derivative of TDI, an oligomer of MDI, a biuret derivative of HDI, an isocyanurate derivative of HDI, a uretodion derivative of HDI, a TDI/HDI copolymer, and an isocyanurate derivative of IPDI.

The silane coupling agent containing an imidazole group of the present invention can be any compound in which an imidazole group and an alkoxysilyl group are contained in one molecule, and, any of which will give the effect of the present invention. Examples were listed in Japanese Patent Publication Nos. H05-186479, H05-039295, H09-295992, and 2000-297094. Of these, preferable examples include a compound obtained by a reaction of an imidazole compound and 3-glycidoxypropyltrimethoxysilane, and a compound obtained by a reaction of an imidazole compound and 3-methacryloxypropyltrimethoxysilane. It is particularly favorable to use a compound obtained by a reaction of an imidazole compound containing a hydroxyl group in its molecule and 3-glycidoxypropyltrimethoxysilane.

The silane coupling agent containing an imidazole group of the present invention reacts with a polyisocyanate or a polyol and forms a three-dimensional network in the resin, thereby enhancing the properties of the cured resin. Of these silane coupling agents containing an imidazole group, those having a hydroxyl group in their molecule are advantageous in that the portion with the hydroxyl group reacts extremely efficiently with a polyisocyanate, creating a more developed network structure, so these compounds are particularly good in terms of improving adhesion to base materials and so forth. In addition, since the nitrogen atoms included in the imidazole groups of the imidazole group-containing silane coupling agent have the characteristics of tertiary amine, the imidazole compound will enhance promoting the curing of the resin. The volatility is lower than when a volatile amine or the like is used, which prevents problems such as bad odor.

As for the method of mixing the resin composition, the effect of the present invention can be fully realized by adding the imidazole silane compound to either the polyisocyanate or the polyol, or to both, and then mixing them and curing, or by simultaneously mixing the polyisocyanate, the polyol, and the imidazole silane compound.

The proportions when using the polyisocyanate and polyol are preferably varied according to the intended application such that the ratio (NCO/OH) of the number of isocyanate groups in the polyisocyanate to the number of hydroxyl groups in the polyol satisfies from 0.6 to 4.0. For example, in the case of a two-pack type of paint or adhesive, the range is from 0.8 to 1.2. With a moisture-curing one-pack type of paint or adhesive, the range is from 1.1 to 3.0 so that there will be an excess of isocyanate groups. In the manufacture of soft and semi-rigid foams, the range is generally from 0.6 to 1.3, while in the manufacture of rigid foams and urethane elastomers the range is generally from 0.6 to 4.0. If polyisocyanate groups are present with failing to meet the above ranges, it has to be cured by moisture, then, the curing promotion effect that is a feature of the present invention will not be exhibited. Curing will not be even achieved if the polyol is present in an excess amount.

The amount of the imidazole group-containing silane coupling agent to be added is from 0.01 to 10 weight parts, and preferably 0.1 to 5 weight parts, per 100 weight parts of the overall resin (the sum of polyol and polyisocyanate). If the silane coupling agent is added in an amount being extremely out of the above range, it will damage on the pot life of the resin, and the resin will end up costing more, which is contrary to the object of the present invention. If the amount is less than 0.01 weight part, though, the performance of the imidazole group-containing silane coupling agent will not be fully realized.

As long as the effect of the present invention is not compromised, other catalysts can be used concurrently in the resin composition of the present invention. Examples of these other catalysts include conventional known organometal catalysts, tertiary amines, quaternary ammonium salts, or the like.

A foaming agent is added when the resin composition of the present invention is used as a urethane foam. Water and low-boiling organic compounds are such foaming agents. Hydrocarbon and halogenated hydrocarbon compounds are exemplified as the low-boiling organic compounds.

If needed, a surfactant can be used in the present invention. The surfactant used in the present invention is a conventional organic silicone-based surfactant, which is used in an amount of 0.1 to 10 weight parts per 100 weight parts of the polyol.

In addition, modifiers, solvents, pigments, matting agents, leveling agents, thickeners, defoaming agents, crosslinking agents, chain extenders, flame retarders, anti-aging agents, and other known additives can be used as needed. The kind and added amount of these additives can be within the normal ranges to the extent that known procedures and manners are followed.

### Examples

The present invention will now be described through Examples, but is not limited by these Examples.

### Examples 1 to 2 and Comparative Examples 1 to 4

### Estimation of the curing promotion effect of imidazole group-containing silane coupling agent

The curing promotion effect of an imidazole group-containing silane coupling agent on a urethane resin was evaluated using the following compositions and procedures. The imidazole group-containing silane coupling agents evaluated were: one that had a hydroxyl group in its molecule (the compound disclosed in Japanese Patent Publication No. H5-186479, obtained by a reaction of an imidazole compound and 3-glycidoxypropyltrimethoxysilane, hereinafter referred to as imidazole silane A, Example 1); and one that did not have a hydroxyl group (the compound disclosed in Japanese Patent Publication No. 2000-297094, obtained by a reaction of an imidazole compound and
3-methacryloxypropyltrimethoxysilane, hereinafter referred to as imidazole silane B, Example 2). As Comparative Examples, another common silane coupling agent
(3-glycidoxypropyltrimethoxysilane, Comparative Example 1), an imidazole compound of the conventional catalysts (2-ethyl-4-methylimidazole, Comparative Example 2) and a tertiary amine (triethylamine, Comparative Example 3), and a system with no catalyst added (Comparative Example 4) were also examined.

### Basic composition of resin

### (Ratio of isocyanate groups to hydroxyl groups NCO/OH = 1.01)

Polyol (Sumika Bayer, Desmophen A 365 BA/X)76 weight parts Polyisocyanate (Sumika Bayer, Sumidur N3200) 24 weight parts Additive (imidazole silane A, or imidazole silane B, or 3-glycidoxypropyltrimethoxysilane, or 2-ethyl-4-methylimidazole, or triethylamine) 0.5 weight part

The above resin compositions were each diluted with 50 weight parts of xylene, after which a paint film was formed by spin coating in a thickness of about 20 µm on a sheet of zinc-plated steel (Zincote EGC-C, made by Nippon Testpanel, degreased with acetone and hexane). The residual isocyanate group content in this paint film was measured by FT-IR and evaluated. These results are given in FIG. 1.

In the system to which an imidazole group-containing silane coupling agent has been added, the residual isocyanate group content was lower than that of the system to which no catalyst was added, just as with the triethylamine and imidazole compound, which are ordinary catalysts. Accordingly, it was confirmed that the reaction between the polyol and the polyisocyanate was promoted.

### Examples 3 to 4 and Comparative Examples 5 to 11

Estimation of the contribution of imidazole group-containing silane coupling agent to increased adhesion to base material
The effect that the imidazole silane compound has on adhesion to base material was evaluated using the following compositions and procedures. As Examples, the above-mentioned imidazole silane A (Example 3) and imidazole silane B (Example 4) as the imidazole silane compounds of additives were evaluated. As Comparative Examples, other general silane coupling agents, namely, 3-glycidoxypropyltrimethoxysilane of (Comparative Example 5), 3-aminopropyltriethoxysilane (Comparative Example 6), and 3-mercaptopropyltrimethoxysilane (Comparative Example 7), an imidazole compound of the conventional catalysts, namely, 2-ethyl-4-methylimidazole (Comparative Example 8), triethylamine (a tertiary amine, Comparative Example 9) and Desmorapid PP (a tertiary amine made by Sumika Bayer, Comparative Example 10), and a system with no catalyst added (Comparative Example 11) were also examined.

### Basic composition of resin

Ratio of isocyanate groups to hydroxyl groups NCO/OH= 1.01)
Polyol (Sumika Bayer, Desmophen A 365 BA/X)76 weight parts Polyisocyanate (Sumika Bayer, Sumidur N3200) 24 weight parts
Additive (imidazole silane A, or imidazole silane B, or 3-glycidoxypropyltrimethoxysilane, or 3-aminopropyltriethoxysilane, or 3-mercaptopropyltrimethoxysilane, or 2-ethyl-4-methylimidazole, or triethylamine, or Desmorapid PP) 0.5 weight part

The above resin compositions were each diluted with 50 weight parts of xylene, after which a paint film was formed by spin coating in a thickness of about 20 µm on a sheet of zinc-plated steel (Zincote EGC-MO, made by Nippon Testpanel, degreased with acetone and hexane).
After leaving them for at least 5 days, this paint film was subjected to a crosscut tape test according to JIS K 5600-5-6. These results are given in Table 1.

**Table 1**

| Crosscut tape test | | |
|---|---|---|
| | Additive | Result |
| Example 3 | imidazole silane A | ⊚ |
| Example 4 | imidazole silane B | ○ |
| Comparative Example 5 | 3-glycidoxypropyltrimethoxysilane | Δ |
| Comparative Example 6 | 3-aminopropyltriethoxysilane | Δ |
| Comparative Example 7 | 3-mercaptopropyltrimethoxysilane | Δ |
| Comparative Example 8 | 2-ethyl-4-methylimidazole | Δ |
| Comparative Example 9 | triethylamine | Δ |
| Comparative Example 10 | Desmorapid PP (tertiary amine made by Sumika Bayer) | Δ |
| Comparative Example 11 | none added | × |

| | | |
|---|---|---|
| ⊚: no separation of resin was observed ○: slight separation of resin was observed Δ: considerable portion of the resin separated ×: nearly all the resin separated | | |

The above results prove that the imidazole group-containing silane coupling agents contributed to increasing the adhesion between the resin and the base material. It was also confirmed that of these imidazole group-containing silane coupling agents, the one that had a hydroxyl group in its molecule (imidazole silane A) in particular contributed to increasing adhesion to the base material.

### Examples 5 and 6 and Comparative Examples 12 to 15

### Saltwater spray test

A saltwater spray test was conducted using the following compositions and procedures, to examine the corrosion resistance effect of the imidazole group-containing silane coupling agents for metal, that is, their contribution to improving adhesion between resin and metal. In the Examples, the above-mentioned imidazole silane A (Example 5) and imidazole silane B (Example 6) as the imidazole silane compounds of additives were evaluated. As comparative examples, another general silane coupling agent ( 3-aminopropyltriethoxysilane, Comparative Example 12), an imidazole compound of the conventional catalysts (2-ethyl-4-methylimidazole, Comparative Example 13), a tertiary amine (triethylamine, Comparative Example 14), and a system with no catalyst added (Comparative Example 15) were also evaluated.

### Basic composition of resin

(Ratio of isocyanate groups to hydroxyl groups (NCO/OH) = 1.01)
Polyol (Sumika Bayer, Desmophen A 365 BA/X)76 weight parts Polyisocyanate (Sumika Bayer, Sumidur N3200) 24 weight parts
Additive (imidazole silane A, or imidazole silane B, or 3-aminopropyltriethoxysilane, or 2-ethyl-4-methylimidazole, or triethylamine) 0.5 weight part

The above resin compositions were each diluted with 50 weight parts of xylene, after which a paint film was formed by spin coating with a thickness of about 20 µm on a sheet of zinc-plated steel (Zincote EGC-MO, made by Nippon Testpanel, degreased with acetone and hexane).

After leaving them for at least 5 days, this paint film was subjected to a saltwater spray test (according to JIS Z 2371, the test conditions were: a saltwater concentration of 5%, a saltwater temperature of 35 . 2.C, a temperature inside the spray chamber of 35 . 2.C, and a spray quantity of 1 to 2 mL/80 cm²/hour), and the time until white rust appeared was measured. These results are given in Table 2.

**Table 2**

| The results of saltwater spray test | | |
|---|---|---|
| | Additive | Time to white rust |
| Example 5 | imidazole silane A | 240 hours or more |
| Example 6 | imidazole silane B | 240 hours or more |
| Comparative Example 12 | 3-aminopropyltriethoxysilane | 120 hours |
| Comparative Example 13 | 2-ethyl-4-methylimidazole | 96 hours |
| Comparative Example 14 | triethylamine | 72 hours |
| Comparative Example 15 | none added | 72 hours |

The above results confirm that the imidazole group-containing silane coupling agents contributed to increasing the corrosion resistance.
Also, while an unpleasant amine smell was detected during the work with the triethylamine, there was no unpleasant odor with imidazole silane A or imidazole silane B, therefore the working environment is excellent.

### INDUSTRIAL APPLICABILITY

Adding a silane coupling agent that contains an isocyanate group in the reaction of a polyol and a polyisocyanate promotes the curing of the resin composition and improves adhesion to base materials such as metal. This composition is the basic composition of urethane and fluorine-based paints, urethane adhesives, urethane foams, and urethane elastomers, and can be used as an agent for promoting curing and improving adhesion in these applications.

## Claims

1. A resin composition, comprising the following components as essential components:
(A) a polyol;
(B) a polyisocyanate; and
(C) a silane coupling agent containing an imidazole group,
(wherein the ratio NCO/OH of a number of isocyanate groups in the polyisocyanate (B) to a number of hydroxyl groups in the polyol (A) in said composition is from 0.6 to 4.0, and a weight ratio of {(A) + (B)}:(C) is from 100:0.01 to 100:10).

2. The resin composition according to Claim 1, wherein the polyol (A) is a polyester polyol, an acrylic polyol, a polyether polyol, or a fluoroethylene-containing polyol.

3. The resin composition according to Claim 1 or 2, wherein the polyisocyanate (B) is toluene diisocyanate (TDI), diphenylmethane-4,4'-diisocyanate (MDI), diphenylmethane-2,4'-diisocyanate, hexamethylene diisocyanate (HDI), bis(4-isocyanatocyclohexyl)methane (H₁₂MDI), isophorone diisocyanate (IPDI), or a derivative obtained by oligomerization of these.

4. The resin composition according to any of Claims 1 to 3, wherein the silane coupling agent containing an imidazole group (C) is one that has a hydroxyl group in its molecule, or a derivative thereof.

5. The resin composition according to any of Claims 1 to 4, wherein the silane coupling agent containing an imidazole group (C) is a compound obtained by a reaction of an imidazole compound and 3-glycidoxypropyltrimethoxysilane.

6. A urethane-based paint whose active component is the resin composition according to any of Claims 1 to 5.

7. A fluorine-based paint whose active component is the resin composition according to any of Claims 1 to 5.

8. A urethane-based adhesive whose active component is the resin composition according to any of Claims 1 to 5.

9. A urethane foam whose active component is the resin composition according to any of Claims 1 to 5.

10. An elastomer whose active component is the resin composition according to any of Claims 1 to 5.

## Patentansprüche

1. Harzzusammensetzung, umfassend die folgenden Komponenten als wesentliche Komponenten:
(A) ein Polyol;
(B) ein Polyisocyanat; und
(C) ein Silan-Kupplungsmittel, enthaltend eine Imidazolgruppe,
(wobei das Verhältnis NCO/OH von einer Anzahl von Isocyanatgruppen in dem Polyisocyanat (B) zu einer Anzahl von Hydroxylgruppen in dem Polyol (A) in der Zusammensetzung 0,6 bis 4,0 beträgt und ein Gewichtsverhältnis von {(A) + (B)}:(C) 100:0,01 bis 100:10 beträgt).

2. Harzzusammensetzung gemäß Anspruch 1, wobei das Polyol (A) ein Polyesterpolyol, ein Acrylpolyol, ein Polyetherpolyol oder ein Fluorethylen-enthaltendes Polyol ist.

3. Harzzusammensetzung gemäß Anspruch 1 oder 2, wobei das Polyisocyanat (B) Toluoldiisocyanat (TDI), Diphenylmethan-4,4'-diisocyanat (MDI), Diphenylmethan-2,4'-diiso-cyanat, Hexamethylendiisocyanat (HDI), Bis(4-isocyanatocyclohexyl)methan (H₁₂MDI), Isophorondiisocyanat (IPDI) oder ein Derivat, welches durch Oligomerisation von diesen erhalten wird, ist.

4. Harzzusammensetzung gemäß einem der Ansprüche 1 bis 3, wobei das Silan-Kupplungsmittel, enthaltend eine Imidazolgruppe, (C) eines ist, welches eine Hydroxylgruppe in seinem Molekül aufweist, oder ein Derivat davon.

5. Harzzusammensetzung gemäß einem der Ansprüche 1 bis 4, wobei das Silan-Kupplungsmittel, enthaltend eine Imidazolgruppe, (C) eine Verbindung ist, die durch eine Umsetzung einer Imidazolverbindung und 3-Glycidoxypropyltrimethoxysilan erhalten wird.

6. Anstrichmittel auf Urethan-Basis, dessen aktive Komponente die Harzzusammensetzung gemäß einem der Ansprüche 1 bis 5 ist.

7. Anstrichmittel auf Fluor-Basis, dessen aktive Komponente die Harzzusammensetzung gemäß einem der Ansprüche 1 bis 5 ist.

8. Klebstoff auf Urethan-Basis, dessen aktive Komponente die Harzzusammensetzung gemäß einem der Ansprüche 1 bis 5 ist.

9. Urethan-Schaum, dessen aktive Komponente die Harzzusammensetzung gemäß einem der Ansprüche 1 bis 5 ist.

10. Elastomer, dessen aktive Komponente die Harzzusammensetzung gemäß einem der Ansprüche 1 bis 5 ist.

## Revendications

1. Composition de résine, comportant les composants suivants en tant que composants essentiels :
(A) un polyol;
(B) un polyisocyanate, et
(C) un agent de couplage silane contenant un groupe imidazole,
(dans lequel le rapport NCO/OH d'un nombre de groupes isocyanates dans le polyisocyanate (B) sur un nombre de groupes hydroxyles dans le polyol (A) de ladite composition est de 0,6 à 4,0, et un rapport en poids de {(A) + (B)}:(C) est de 100 : 0,01 à 100:10).

2. Composition de résine selon la revendication 1, dans lequel le polyol (A) est un polyol polyester, un polyol acrylique, un polyol polyéther ou un polyol contenant du fluoroéthylène.

3. Composition de résine selon la revendication 1 ou 2, dans laquelle le polyisocyanate (B) est le diisocyanate de toluène (TDI), le 4,4' diisocyanate de diphénylméthane (MDI), le 2,4' diisocyanate de diphénylméthane, le diisocyanate d'hexaméthylène (HDI), le bis-(4isocyanatocyclohexyl)méthane (H₁₂MDI), le diisocyanate d'isophorone (IPDI), ou un dérivé obtenu par oligomérisation de ceux-ci.

4. Composition de résine selon l'une quelconque des revendications 1 à 3, dans laquelle l'agent de couplage silane contenant un groupe imidazole (C) est un agent qui a un groupe hydroxyle dans sa molécule, ou un dérivé de celui-ci.

5. Composition de résine selon l'une quelconque des revendications 1 à 4, dans laquelle l'agent de couplage silane contenant un groupe imidazole (C) est un composé obtenu par réaction d'un composé d'imidazole et de 3-glycidoxypropyltriméthoxysilane.

6. Peinture à base d'uréthane dont le composant actif est la composition de résine selon l'une quelconque des revendications 1 à 5.

7. Peinture à base de fluor dont le composant actif est la composition de résine selon l'une quelconque des revendications 1 à 5.

8. Adhésif à base d'uréthane dont le composant actif est la composition de résine selon l'une quelconque des revendications 1 à 5.

9. Mousse d'uréthane dont le composant actif est la composition de résine selon l'une quelconque des revendications 1 à 5.

10. Elastomère dont le composant actif est la composition de résine selon l'une quelconque des revendications 1 à 5.
